Europäisches Patentamt

(19) European Patent Office

Office européen des brevets

(11) Publication number: **0 083 087**
**B1**

(12) EUROPEAN PATENT SPECIFICATION

(45) Date of publication of patent specification: 12.08.87

(51) Int. Cl.⁴: **H 04 N 9/31**

(21) Application number: 82111968.2

(22) Date of filing: 23.12.82

(54) **High efficiency optical tank for two-color liquid crystal light valve image projection with color selective prepolarization.**

(30) Priority: 28.12.81 US 334681
28.12.81 US 334678

(43) Date of publication of application:
06.07.83 Bulletin 83/27

(45) Publication of the grant of the patent:
12.08.87 Bulletin 87/33

(84) Designated Contracting States:
CH DE FR GB IT LI SE

(56) References cited:
US-A-4 127 322
US-A-4 191 456

(73) Proprietor: Hughes Aircraft Company
7200 Hughes Terrace P.O. Box 45066
Los Angeles California 90045-0066 (US)

(72) Inventor: Gagnon, Ralph J.
909 Sequoyah
Chico California 95926 (US)

(74) Representative: Kuhnen, Wacker & Partner
Schneggstrasse 3-5 Postfach 1729
D-8050 Freising (DE)

## Description

The invention relates to a two-color image projection system comprising a high intensity lamp for providing light energy; a system of dichroic separators and prepolarizing beam splitters for splitting and prepolarizing the light emitted from said lamp into beams of different color and polarization states; reflecting light valves for selectively modulating the polarization state of each of said light beams; and means for combining the modulated light beams into a single output beam.

Such an image projection system is disclosed in US—A—4,191,456. This image projection system is a three-color system in which the light provided by a high intensity lamp first passes a prepolarizing prism so that a first light beam is produced which is still white, but has a predetermined polarization. This light beam is split by two dichroic separators into three beams which are of different color but still have the polarization of the first beam. Each of the three beams of different color is directed to a polarizing beam splitter which passes the light having the predetermined polarization to a reflecting light valve, which selectively modulates the polarization state in response to information applied thereto. The light having the modulated polarization state is reflected to the polarizing beam splitter which passes the portion of the light beam having a polarization different from the predetermined polarization to an arrangement of dichroic filters which combines the three beams of different color into a single output beam.

The quality of the projected image is generally a function of brightness, resolution and contrast. Image quality can generally be improved by placing a prepolarizing prism in the optical path in front of the main polarizing prism. The known system includes such a prepolarizing prism between the light source and the system of dichroic separators. Resolution and contrast does not only depend on the modulation performance of the light valves, but to a high degree also on the precision with which the beams of different color are recombined to the single output beam. This recombination makes necessary an exact point by point coverage of the different beams at the combining means and a perfect parallelism of the different components of the output beam. The necessary optical adjustments are the more difficult the more components the separated beam of different color have to pass. Further, the image quality depends on the ability of the system to resist against all effects which could disturb the selected adjustments.

It is the object of the invention to provide a system which has an improved stability to provide a projected image of high resolution and contrast even under hard conditions over extended time periods.

This object is met by the invention in that said system of dichroic separators and prepolarizing beam splitters and also said combining means are encased in a common oil-filled housing of unitary construction.

The present invention provides a two-channel color selective prepolarization system which because of its unitary structure has a very high mechanical stability. Further, it allows to design the optical system for a minimum of optical elements and to arrange these elements in very short distances. A preferred embodiment of the invention includes a prepolarizing beam splitter for splitting and prepolarizing light from the source into first and second beams having first and second polarization states, respectively. First and second dichroic separators are included for extracting light of a first color from the first beam and light of a second color from the second beam, respectively. The resultant output of each separator is a collimated polarized monochromatic beam. The separator outputs are recombined by a beam combiner into a single beam which is directed to a second beam splitter (main prism). The main prism splits the single beam and directs light of the first and second polarizations through the second and third apertures, respectively. Liquid crystal light valves mounted at the second and third apertures modulate the polarization state of the exiting light and return it to the main prism to be directed to the fourth aperture. The system thus provides two-channel prepolarization by way of an oil coupled optical arrangement. A similar three-color projection system is the subject matter of co-pending patent application no. 82111976.5.

The various features and advantages of the present invention may be more readily understood with reference to the following detailed description taken in conjunction with the accompanying drawings, in which:

FIG. 1 is a perspective view of a diagrammatic representation of a first embodiment of the present invention.

FIG. 2 is a diagrammatic representation of a second embodiment of the present invention.

FIG. 3 is a perspective view of the second embodiment of the present invention.

FIG. 4 is a top plan view of the bottom plate of the second embodiment of the present invention.

FIG. 5 is a side elevational view of the light valve exit window of the second embodiment of the present invention.

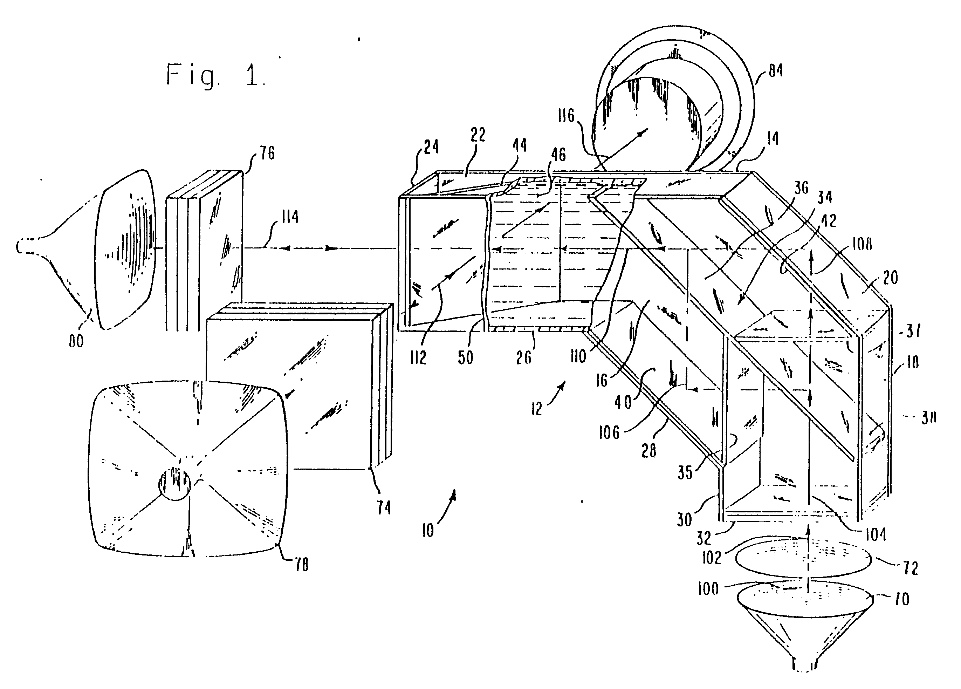

As shown in Figure 1, the first embodiment of the invention 10 includes a container 12 made of metal, plastic, glass or other suitably rigid material. In the preferred embodiment, the container is glass. The container 12 is dimensioned to provide the most compact unit with regard to the requirements that the polarizers be oriented at a predetermined angle relative to incident light. The container is hollow having walls on the order of 1/4 inches thick. The exterior dimensions of the container are determined with regard to the dimensions of the associate optical components discussed below. The container is filled with optical grade oil having an index of refraction of 1.622. It is understood that glass or oils of other indices of refraction may be used without departing from the scope of this invention. Note that the use of oil or glass of another index may require a change in the below described design of optical components. The container 12 has side surfaces 14 and 16, rear surfaces 18 and 20, top surface 22, front surface 24, and lower surfaces 26, 28, 30 and 32. The surfaces 14—32 may include milled grooves, posts or special adhesives (not shown) which are effective in maintaining the optical components in proper alignment and effectively sealing the spaces therebetween. As described more fully below, surfaces 14, 16, 24 and 32 are transparent and provide apertures through which light enters and leaves the system.

The surface 32 provides an input aperture. It is a glass sharp-cut Schott GG47S filter having an index of refraction of 1.54. The surface 32 is coated to reflect ultraviolet light and prevent overheating. The coating is constructed at a wavelength (or optical thickness) $\lambda = 390$ nm. It includes a first layer of depth $d = 1.49$ quarter waves and index of refraction $n = 1.92$. This first layer is topped with 10 sets of layers of depth $d = .5$ quarter waves and index $n = 1.46$, a second layer of depth $d = 1$ quarter wave and $n = 2.32$ and a third layer of depth $d = .5$ quarter wave and index $n = 1.46$. These sets of layers are topped with a final layer of depth $d = 1.49$ quarter waves and index $n = 1.55$. This coating also serves as an anti-reflection coating for red and green wavelengths.

A prepolarizing beamsplitter 34 is mounted within the container 12 so that its transverse axis lies between surfaces 14 and 16. It is disposed in optical alignment with the ultraviolet filter at surface 32. The prepolarizing beamsplitter 34 is constructed of glass or optical grade fused silica having a birefringence less than or equal to 6nm/cm and an index $n = 1.62$. The prepolarizer 34 is a plate which has dimensions of $7.6'' \times 2.9'' \times 1/8''$. The prepolarizer 34 has an upper portion 36 and a lower portion 38. The lower portion 38 serves as a prepolarizing beamsplitter. The upper portion 36 serves as a beam combiner. The prepolarizing beamsplitter 34 has a thin film coating which is constructed at an optical thickness $\lambda = 500$ nm. The coating includes a first layer of depth $d \times 1.557$ quarter waves and index $n = 2.05$; a second layer of depth $d = .994$ quarter waves and index $n = 1.35$; five sets of layers each set having a first layer of depth $d = 1.157$ quarter waves and index $n = 2.32$ and a second layer of depth $d = 1.988$ quarter waves and index $n = 1.35$; followed by a layer having a depth $d = 1.157$ quarter waves and an index $n = 2.32$; followed by a layer of depth $d = .994$ quarter waves and an index $n = 1.35$; and a final layer of depth $d = 1.557$ quarter waves and an index $n = 2.05$.

The prepolarizing beamsplitter 34 is mounted so that its transverse axis is horizontal to the plane of the input aperture 32. A red pass filter 35 is mounted between the prepolarizer 34 and the intersection of surfaces 28 and 30. A green pass filter 37 is mounted between the prepolarizer 34 and the intersection of surfaces 18 and 20. Each filter is made of an optical grade of fused silica having an index of refraction $n = 1.62$ and a birefringence less than or equal to 6 nm/cm. Each has dimensions $2.9'' \times 2.6'' \times 1.8''$. The red filter 35 is coated to pass red light and reflect light of other colors. The coating includes a first layer of depth $d = 1.228$ quarter waves and index $n = 2.32$; 13 sets of layers each set having a first layer of depth $d = .5$ quarter waves and index $n = 1.46$; a second layer of depth $d = 1$ quarter waves and index $n = 2.32$ and a third layer of depth $d = .5$ quarter waves and index $n = 1.46$; and a final layer of depth $d = 1.228$ quarter waves and index $n = 2.32$. The construction is at an optical thickness $\lambda = 492$ nm.

Similarly, the green filter 37 is coated to pass green light and reflect light of other colors. Its coating includes a first and last layer of depth $d = 0.85$ quarter waves and index $n = 2.32$ between which 15 sets of layers are sandwiched, each set including a first layer of depth $d = 0.5$ quarter waves and index $n = 2.05$, a second layer of depth $d = 1.0$ quarter waves and index $n = 1.6$, and a third layer of depth $d = 0.5$ quarter waves and index $n = 2.05$. This construction is at an optical thickness $\lambda = 640$ nm.

A first mirror 40 is disposed on the interior of the surface 28. The mirror 40 is of a conventional construction with birefringence less than 6 nm/cm. No optical thin film coatings are required. The mirror may be constructed of Schott F2 glass of index of refraction of 1.62. The mirror dimensions are $4.3'' \times 2.9'' \times 1/8''$.

A second mirror 42 is mounted on the interior of surface 20. The mirror 43 is identical to the mirror 40 with the exception that its dimensions are $3.7'' \times 2.9'' \times 1/8''$.

The main polarizer 44 is the second polarizing beamsplitter of this invention. It is oriented at a twist relative to the prepolarizing beamsplitter 34 such that its transverse axis lies between surfaces 22 and 26, perpendicular to the transverse axis of the prepolarizing beamsplitter 34. As a result, the beamsplitting and color separating plates are perpendicular to a common vertical plane in the prepolarizing section while all the plates in the main polarizer are perpendicular to a horizontal plane. This results in two advantages. First, this allows the illumination light to be brought in on a vertical line from below the prepolarizer 34 thereby reducing physical awkwardness. Second, it results in improved polarizing beamsplitter performance. According to calculations, the performance improvement significantly obviated the necessity for trim filters at the light valve and the exit windows. This performance improvement results from the fact that with most currently available polarizers, polarization by transmission is more effective than polarization by reflection. That is, when the prepolarizer 34 reflects S polarized light through the red filter 35 and transmits P polarized light through the green filter 37, some P polarized light is also reflected to the red filter 35. Without the 90° twist, and since for reasons of economy the main polarizer has the same design as the prepolarizer 34, the main polarizer would similarly reflect some green P polarized light to the red light valve. This necessitates the use of a light lowering red trim filter in front of the red light valve to remove the reflected green P polarized light. The problem is further exacerbated by the fact that the transmission of green P polarized light to green light valve in the off state will result in the reflection of the green P polarized light back to the main polarizer 44. Most of this light will pass through the polarizer 44 and return to the illumination system. However, once again some green P polarized light is reflected to the red light valve by the beamsplitter 44. This light reaches the projection screen and lowers image contrast.

Since the 90° twist at the main polarizer 44 interchanges the roles of S and P polarized light, the main polarizer 44 sees green S and red P polarized light. Snce there is no green P polarized light present at the main polarizer 44, no trim filter is required at the red light valve. Thus, the system is more efficient and the displayed image is brighter. In addition, no green P is projected on the screen and the displayed image has greater contrast.

The main polarizer 44 is constructed of Schott F2 glass with an index of refraction of 1.62. The main polarizer 44 is mounted so that light will be incident on it at an angle of 48° relative to its longitudinal axis. It has dimensions of 3.4" × 2.5" × 1/4". As mentioned above, the main prism 44 has the same thin film coating as the prepolarizing beamsplitter 34.

A source 70 and collimating optics 72 are mounted in optical alignment with the input surface 32. Liquid crystal light valves 74 and 76 are mounted parallel with surfaces 16 and 24, respectively. Cathode ray tubes 78 and 80 are mounted in optical alignment with liquid crystal light valves 74 and 76, respectively.

In operation, the source 70 emits unpolarized light which is collimated by lens 72 and filtered by UV filter at surface 32. The filtered collimated unpolarized light is incident on the prepolarizing beamsplitter 34 at an angle of 48°. The S polarized light is transmitted through the red filter 35 and reflected by mirror 40 to the upper portion 36 of the prepolarizer 34. The P polarized light is transmitted through a green filter 37 and reflected by mirror 42 to the upper portion 36 of the prepolarizing beamsplitter 34. The prepolarizing beamsplitter 34 recombines the beams into a single beam and reflects it to the main polarizer 44. As discussed above, since the main polarizer 44 has a traverse axis perpendicular to that of the prepolarizer 34, the polarization states of the incident light are reversed. The red S output of the prepolarizer 34 becomes a red P relative to the main polarizer 44 and is transmitted to the liquid crystal light valve 76. Similarly, the green P component transmitted via the prepolarizer 34 is reflected as green S by the main polarizer 44 to the light valve 74. The light valves 74 and 76 modulate the polarization states of incident light in accordance with writing light provided by cathode ray tubes 78 and 80 in a conventional manner. The polarization modulated light is returned to the main polarizer 44 where modulations of polarization are converted to modulations of intensity and are transmitted to the projection lens 82. It should be noted that many of the above-described optical coatings were designed and performance evaluated by the Thin Film Computer Program provided as a service by the Genesee Company of Rochester, N.Y.

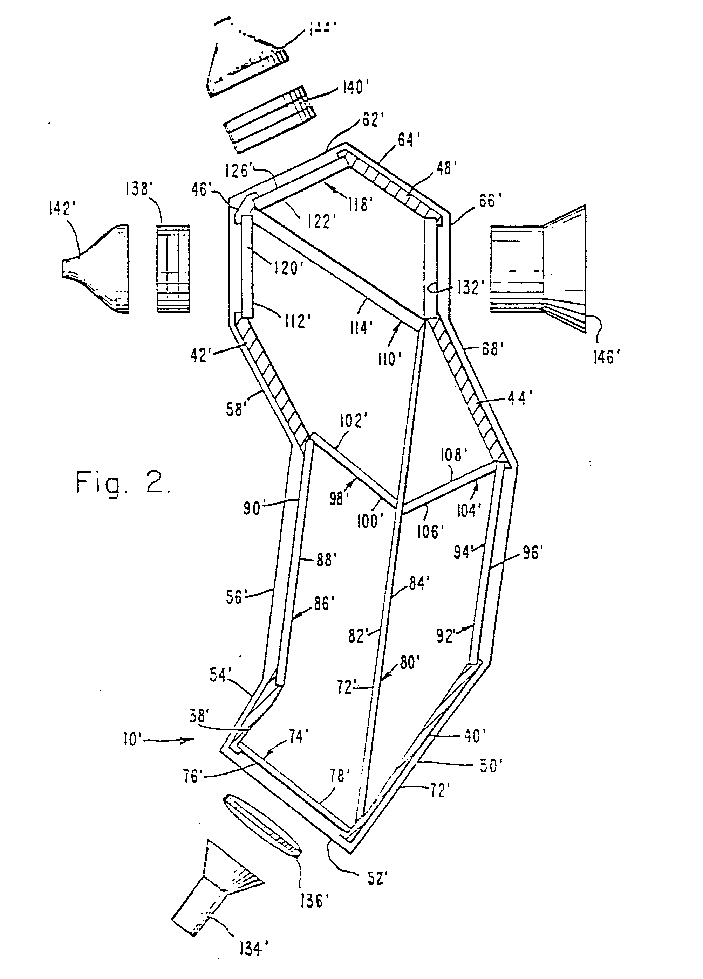

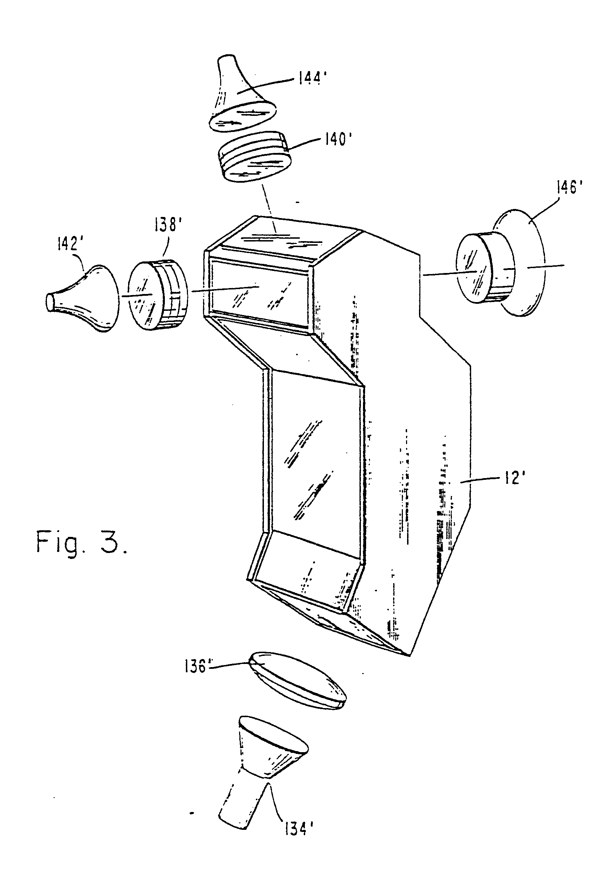

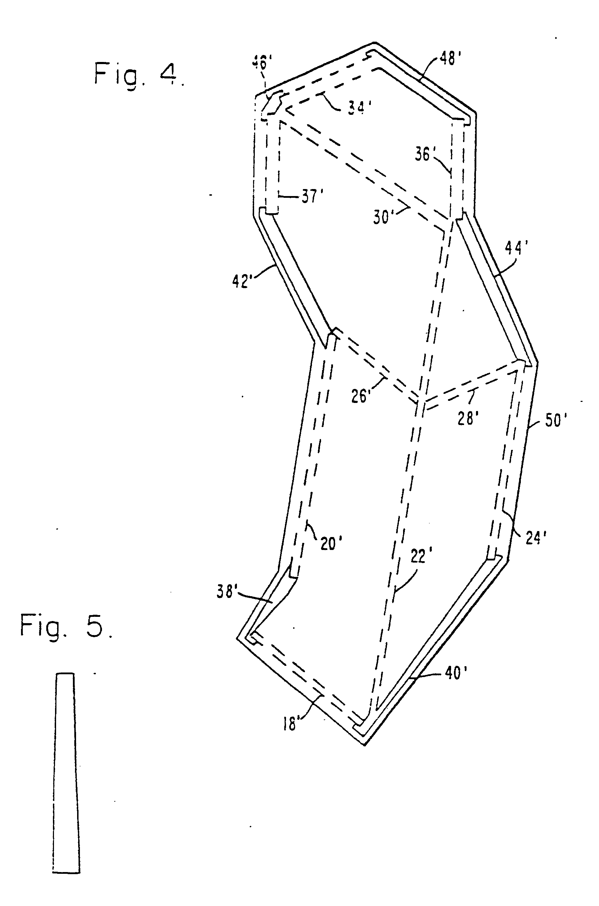

The second embodiment of the invention 10' as shown in the top view of Fig. 2 and the perspective view of Fig. 3 includes a top plate 12' and a bottom plate 14'. As shown in Fig. 4, the top and bottom plates 12' and 14' are mirrored images. Each has milled grooves 18'—36' which hold various glass elements in place. The plates 14' and 16' also include posts 38'—48' which effectively seal the spaces between the glass components seated in the milled grooves. Since the top plate is the mirror image of the bottom plate, the grooves and posts are in alignment. The plates 14' and 16' may be constructed of glass, plastic, metal or any other suitably rigid material. As shown in Fig. 4, each plate has an irregular polygonal shape. As discussed more fully below, this shape is required by the critical juxtapositioning of the optical components.

The exterior wall 50' of the container 10' may be glass, plastic or other suitably transparent material. The exterior wall 50' may be a nontransparent material so long as the input and output apertures of the container 10' are suitably transparent. The exterior wall 50' includes a plurality of planar surfaces 52'—72'. It should be noted that the external shape of the container 10' is not critical so long as the internal components are properly aligned. As mentioned above, the posts and grooves function to maintain the alignment of the components.

An optical filter 74' is mounted in groove 18' between posts 38' and 40'. The filter 74' is made of glass, plastic or other suitably transparent material such as the Schott GG 495 sharp-cut yellow filter. The filter 74' has a high efficiency anti-reflection coating on the input surface 76' which filters ultra-violet light. No coating is required on the opposite surface 78'. The dimensions of the filter are 2.8" × 2.8" × 1/8" respectively. The filter 74' is mounted in a plane substantially parallel to the exterior surface 50' of the container 10'.

A prepolarizing beamsplitter 80' is mounted in groove 22' between posts 40' and 44'. The prepolarizing beamsplitter 80' is constructed of optical grade fused silica having an index of refraction of 1.46 and a birefringence less than or equal to 10 nm/cm. The dimensions of the plate are 10-1/16" × 2.8" × 1/8". The plate may be divided in half providing two 5-1/32" segments if there is a cost savings. On the input surface 82', the plate 80' has a thin film coating consisting of six sets of layers, each set having a first layer of depth 1/4 wavelengths ($\lambda$) and index of refraction (n) of 1.46 and a second layer of depth 1/4 wavelengths and index n = 2.35. This construction is at an optical wavelength nanometers (nm). The index of refraction of the oil medium is n = 1.46. In this embodiment, it was found that an orientation of 57.5 or 58° relative to normal incidence provides the best contrast for the prepolarizing beamsplitter 80', which comes at the expense of a larger size than is possible with smaller incidence angles.

A mirror 86' is mounted in groove 20' between posts 38' and 42'. The mirror 86' is of conventional construction with a birefringence less than or equal to 12 nm/cm. The mirror dimensions are 5'' × 2.8'' × 1/8''. The surface 88' of the mirror 86' must be mirrored. The surface 90' of the mirror 86' may be blackened.

A second mirror 92' is mounted in the groove 24' between posts 40' and 44'. The construction of the second mirror 92' is identical to that of the mirror 86' with the exception that its dimensions which are 4-1/8'' × 2.8'' × 1/8''. The interior surface 94' of the mirror 92' must be reflective while the exterior surface 96' of the mirror 92' may be blackened.

A red dichroic filter 104' is mounted in groove 28' between post 44' and prepolarizing beamsplitter 80'. The red filter 104' is optical grade of fused silica n = 1.46 with a birefringence less than or equal to 10 nm/cm. The green dichroic filter 98' has dimensions of 2'' × 2.8'' × 1/8''. It has a coating on the forward surface 106' that is effective to transmit green light and reflect light of other colors. The coating includes 13 sets of thin film layers. Each set having a first layer of optical thickness equal to one-half of one quarter wavelength and index of refraction (n) equal to 1.46, a second layer of thickness equal to one quarter wavelength and n = 2.32 and a third layer one half of one quarter wavelength in depth and n = 1.46. These sets of layers are sandwiched between two additional layers of depth 1.228 quarter wavelengths at n = 2.32. This construction is at optical thickness $\lambda$ = 496 nm.

A green dichroic filter 98' is mounted in groove 26' between post 42' and the prepolarizing beamsplitter 80'. The green filter 98' is of the same construction as the red filter 104' with the exception that its dimensions are 2 × 2.8'' × 1/8''. Surface 100' is coated with 13 sets of thin film layers sandwiched between two additional layers which is then sandwiched between two final layers. The 13 sets of layers is such that each set includes a first layer of depth 0.125$\lambda$ and index n = 1.46, a second layer of depth 0.25$\lambda$ and index n = 2.32 and a third layer of depth 0.125$\lambda$ and index n = 1.46. These 13 sets of layers are sandwiched between two additional layers, each of which has a depth of .84 quarter wavelengths and index n = 1.46. These 13 sets of layers and two additional layers are then sandwiched between two final layers, each of which has a depth of 0.84 quarter wavelengths and index n = 2.32. The construction is at an optical thickness $\lambda$ = 664 nm. Each of the filters 98' and 104' may have edges beveled to provide a close interfit with the prepolarizing beamsplitter 80', mirrors 86' and 92' and posts 42' and 44'.

The main beamsplitter 110' is mounted in groove 30' between posts 44' and 46'. Its edges may be beveled or angled to provide a close interfit with the prepolarizing beamsplitter 80' and the trim filter or light valve exit window 112' to be discussed more fully below. The main beamsplitter 110' is constructed of optical grade isotropic fused silica having an index n = 1.46 and birefringence less than or equal to 2 nm/cm. It is mounted relative to the prepolarizing beamsplitter 80' so that light will be incident at an angle of 57.5°. It has dimensions of 3-3/4'' × 2.8'' × 1/4''. It has a thin film multi-layer coating identical to the prepolarizing beamsplitter 80'.

The light valve exit windows or trim filters 112' and 118' are mounted in grooves 32' and 34', respectively, between posts 42' and 46' and 46' and 48', respectively. Each is constructed of optical grade fused silica having a birefringence of less than or equal to 3 nm/cm. Each has a height of 2'', a width of 2.8'', and a depth of 0.14'' at the top and 0.25'' at the bottom. See Fig. 5. Fig. 5 shows a side view of the light valve exit windows 112' and 118'. Surface 120' is coated with the same thin film design as the green dichroic filter 98', and surface 122' is coated with the same thin film design as the red dichroic filter 104' as a cost/performance tradeoff.

The projection lens exit windows 132' is mounted in groove 36' between posts 44' and 48'. It is constructed of optical grade fused silica of a birefringence of less than or equal to 10 nm/cm. On one surface is a high efficiency antireflection coating between 500—700 nm. The projection lens exit window 132' has dimensions of 2'' × 2.8'' × 1/4''.

Fig. 3 shows the invention 10' in an operational environment. The light source 134' and collimating optics 136' are mounted in optical alignment with the filter 74'. Liquid crystal light valves 138' and 140' are mounted parallel with the light valve exit windows 112' and 118', respectively. Cathode ray tubes 142' and 144' are mounted in optical alignment with the liquid crystal light valves 138' and 140', respectively.

In operation, the light source 134' emits unpolarized white light which is collimated by lens 136' and filtered by the UV filter 74'. The filtered collimated unpolarized light is incident on prepolarizing beamsplitter 80' at an angle of 57.5°. The 'S' polarized light is reflected to mirror 86' and the 'P' polarized light is transmitted through the prepolarizing beamsplitter 80' to the mirror 92'. The 'S' polarized light is reflected by mirror 86' to the green filter 98'. The 'P' polarized light is reflected by mirror 92' to the red filter 104'. The green filter 98' transmits green 'S' polarized light to the prepolarizing beamsplitter 80'. The red filter 104' transmits red 'P' polarized light to the prepolarizing beamsplitter 80'. The beamsplitter recombines the outputs of the filters 98' and 104' into a single beam which is incident upon the main beamsplitter 110' at an angle of 5.5°. The green 'S' polarized light is reflected to the green dichroic trim filter acting as a liquid crystal light valve exit window 112' while the red 'P' polarized light is transmitted to the red dichroic trim filter acting as a second liquid crystal light valve exit window 118'. The light exits the windows 112' and 118' and illuminates light valves 138' and 140', respectively. The light valves modulate the polarization of incident light in accordance with the presence of writing light from the cathode ray tubes 142' and 144' in a conventional manner. Accordingly, polarization modulated light is returned to the main prism 110' via windows 112' and 118'. The main prism 110' analyzes the polarization modulated light from the light valves and transmits or reflects it depending upon its polarization state to the projection lens exit window 132'. The combined beams are directed to projection optics 146' which is in alignment with the projection lens exit window 132'. It should be noted that the beamsplitters were designed and evaluated with the aid of the Thin Film Computer Program provided as a service by the Genesee Company of Rochester N.Y.

The present invention has been described with reference to particular embodiments in a particular application. It is understood that other designs of the container may be utilized without departing substantially from the scope of the present invention. It is also understood that certain modifications can be made with regard to the selection of polarization components to be filtered by the red and green filters, respectively. In addition, other dichroic filters may be utilized without departing from the scope of the invention. The prepolarizing beamsplitter 34 need not be a unitary beamsplitter but may, instead, be two separate prepolarizing beamsplitters. Although the invention of the preferred embodiment is immersed in an optical grade oil of an index of refraction of 1.622, glass or oils of other indices may be chosen in accordance with the particular design of the system.

## Claims

1. A two-color image projection system comprising:
a high intensity lamp (70) for providing light energy;
a system of dichroic separators (35, 37) and prepolarizing beam splitters (34, 44) for splitting and prepolarizing the light emitted from said lamp (70) into beams of different color and polarization states;
reflecting light valves (74, 76) for selectively modulating the polarization state of each of said light beams; and
means (44) for combining the modulated light beams into a single output beam,
characterized in that said system of dichroic separators (35, 37) and prepolarizing beam splitters (34, 44) and also said combining means (44) are encased in a common oil-filled housing of unitary construction.

2. The image projection system of claim 1 further characterized by the prismatic box of unitary construction including:
a first planar polarizing beam splitter (38) for splitting and prepolarizing light from the source into first and second beams having first and second polarization states, respectively;
a first dichroic separator (35) for extracting light of a first color from said first beam;
a second dichroic separator (37) for extracting light of a second color from said second beam; and
a dichroic adder (36) for combining the outputs of said first and second dichroic separators into a single beam; and
a second polarizing beam splitter (44) for splitting and polarizing the single beam and directing light of the first color to a first aperture and light of the second color to a second aperture.

3. The image projection system of claim 2 further characterized by the first and second polarizing beam splitters (38, 44) having transverse axes and each being mounted so that the beam splitter transverse axes are oriented at a relative 90° angle.

4. The system of claim 2 or 3 further characterized by mirrors (40, 42) for directing the outputs of said first and second dichroic separators (35, 37) to the dichroic adder (36).

## Patentansprüche

1. Zweifarbiges Bildprojektionssystem mit:
einer Hochintensitäts-Lampe (70) zum Liefern von Lichtenergie;
einem System von Zweifarbentrennern (35, 37) und vorpolarisierenden Bündelaufspaltern (34, 44) zum Spalten und Vorpolarisieren des von der Lampe (70) ausgesendeten Lichtes in Bündel von unterschiedlicher Farbe und Polarisationszuständen;
lichtreflektierende Röhren (74, 76) zur selektiven Modulation des Polarisationszustandes von jedem der Lichtbündel; und
Einrichtungen (44) zum Zusammenfassen der modulierten Lichtbündel in ein einzelnes Ausgangsbündel,
gekennzeichnet dadurch, daß das System der Zweifarbentrenner (35, 37) und vorpolarisierenden Bündelaufspaltern (34, 44) und auch die Kombinationseinrichtungen (44) gemeinsam in einem ölgefüllten Gehäuse von einheitlicher Konstruktion eingeschlossen sind.

2. Bildprojektionssystem nach Anspruch 1, weiter gekennzeichnet durch das Prismen-Gehäuse von einheitlicher Konstruktion, welches aufweist:
einen ersten planaren polarisierenden Bündelaufspalter (38) zum Aufspalten und Vorpolarisieren des Lichts von der Quelle in erste und zweite Bündel, welche jeweils erste und zweite Polarisationszustände haben;

einen ersten Zweifarbentrenner (35) Zum Extrahieren von Licht einer ersten Farbe von dem ersten Bündel;

einem zweiten Zweifarbentrenner (37) zum Extrahieren von Licht einer zweiten Farbe von dem zweiten Bündel; und

einen Zweifarbenaddierer (36) zum Zusammenfassen der Ausgänge des ersten und zweiten Zweifarbentrenners in ein einzelnes Bündel; und

einen zweiten polarisierenden Bündelaufspalter (44) zum Aufspalten und Polarisieren des einzelnen Bündels und zum Lenken von Licht der ersten Farbe zu einer ersten Öffnung und Licht der zweiten Farbe zu einer zweiten Öffnung.

3. Bildprojektionssystem nach Anspruch 2, weiter gekennzeichnet durch die erste und zweite polarisierenden Bündelaufspalter (38, 44), welche transversale Achsen haben, wobei jede so angeordnet ist, daß die Bündelaufspaltungs-Transversal-Achsen in einem relativen Winkel von 90° zueinander verlaufen.

4. System nach Anspruch 2 oder 3, weiter gekennzeichnet durch Spiegel (40, 42) zum Lenken der Ausgänge der ersten und zweiten Zweifarbentrenner (35, 37) auf den Zweifarbenaddierer (36).

**Revendications**

1. Système de projection d'images en deux couleurs comprenant:

une lampe (70) à haute intensité destinée à produire de l'énergie lumineuse;

un système de séparateurs dichroïques (35, 37) et de diviseurs optiques de prépolarisation (34, 44) destiné à diviser et prépolariser la lumière émise par ladite lampe (70) en faisceaux de couleurs et d'états de polarisation différents;

des modulateurs de lumière réfléchissants (74, 76) destinés à moduler sélectivement l'état de polarisation de chacun desdits faisceaux lumineux; et

des moyens (44) destinés à combiner les faisceaux lumineux modulés en un faisceau unique de sortie, caractérisé en ce que ledit système de séparateurs dichroïques (35, 37) et de diviseurs optiques de prépolarisation (34, 44) ainsi que lesdits moyens de combinaison (44) sont logés dans un boîtier commun rempli d'huile, réalisé d'une seul bloc.

2. Système de projection d'images selon la revendication 1, caractérisé en outre par le fait que le boîtier prismatique d'un seul bloc comprend:

un premier diviseur optique plan (38) de polarisation destiné à diviser et prépolariser la lumière provenant de la source en premier et second faisceaux ayant des premier et second états de polarisation respectivement;

un premier séparateur dichroïque (35) destiné à extraire la lumière d'une première couleur dudit premier faisceau;

un second séparateur dichroïque (37) destiné à extraire la lumière d'une seconde couleur dudit second faisceau; et

un additionneur dichroïque (36) destiné à combiner les sorties desdits premier et second séparateurs dichroïques en un faisceau unique; et

un second diviseur optique de polarisation (44) destiné à diviser et polariser le faisceau unique et à diriger la lumière de la première couleur vers une première ouverture et la lumière de la seconde couleur vers une seconde ouverture.

3. Système de projection d'images selon la revendication 2, caractérisé en outre en ce que les premier et second diviseurs optiques de polarisation (38, 44) possédent des axes transversaux et sont montés chacun de manière que les axes transversaux des diviseurs optiques soient orientés en formant un angle de 90° entre eux.

4. Système selon la revendication 2 ou 3, caractérisé en outre par des miroirs (40, 42) destinés à diriger les sorties desdits premier et second séparateus dichroïques (35, 37) vers l'additionneur dichroïque (36).

Fig. 1.

0 083 087

Fig. 2.

Fig. 3.

Fig. 4.

Fig. 5.